# EUROPEAN PATENT APPLICATION

(11) **EP 4 769 341 A1**
(43) Date of publication of application: **01.07.2026**
(21) Application number: 24223811.1
(22) Date of filing: 31.12.2024
(51) Int. Cl.: G06V 20/64

(54) **OBJECT CLASSIFICATION**

(71) Applicant: Trimble Inc, Westminster CO 80021 (US)
(72) Inventor: SKAISGIRYS, Arijus, Westminster, 80021 (US); VALEIKA, Benas, Westminster, 80021 (US); STANKEVICIUS, Jonas, Westminster, 80021 (US); KNIUKSTA, Karolis, Westminster, 80021 (US); JACQUEMIN, Gregoire, Westminster, 80021 (US); VILAYVONG, Sophia, Westminster, 80021 (US); TREMBLAY, Guillaume, Westminster, 80021 (US); FOUQUET, Clément, Westminster, 80021 (US); PLEGADES, Clement, Westminster, 80021 (US); ROUSSELET, THIBAUT, Westminster, 80021 (US)
(74) Representative: Woodhill, Matthew James

(57) **Abstract**

There is provided a computer-implemented method for identifying a target object in a 3D point cloud. The 3D point cloud representing a real-world scene, and the method comprise obtaining plurality of 2D frames of the 3D point cloud depicting the target object at a respective plurality of different angles, identifying the target object in each of the plurality of 2D frames and based on identifying the object in each of the plurality of 2D frames, identifying a set of points in the 3D point cloud that represent the target object.

## Description

### TECHNICAL FIELD

The present disclosure relates to systems and methods for identifying objects in point clouds, and in particular classifying objects within point clouds.

### BACKGROUND

Three-dimensional (3D) scanning is an important tool for producing digital models of different scenes or objects. In many applications, such as building surveying, land surveying, urban planning, road engineering, among many others, a digital model of a scene or object is obtained using a 3D scanning system, such as a LiDAR (light detection and ranging) scanner. The scanning system produces a 3D point cloud representing the scanned scene or object. The 3D point cloud can then be viewed on a computer display, manipulated or interacted with in many different ways for the purposes of planning, design, maintenance, or many other purposes.

In general, a 3D point cloud representing a scene contains sets of data points that represent objects within the scene. For example, a 3D scan of an interior of a building may produce a 3D point cloud containing different sets of points each representing different objects such as doors, windows, furniture, structural details such as beams or columns, or any other suitable object. As another example, a 3D scan of a section of a road may produce 3D point cloud containing sets of points representing a road sign, a lamppost, a section of central reservation, a traffic light, or any other object present in the scene.

For the purposes of using a 3D point cloud for planning, design, maintenance, or any other purpose, it is desirable to be able to classify the objects represented within the 3D point cloud. For example, user may wish to "tag" different objects within the scene that are depicted in the 3D point cloud. Conventionally, tagging of various objects requires a user to manually select every data point that corresponds to the object. For example, if a user wishes to tag a road sign in a 3D point cloud representing a section of a road using conventional techniques, he or she would be required to manually identify and select each data point in the point cloud that corresponds to the sign. Depending on the quality/resolution of the point cloud, a set of data points representing an object may include 100s or even 1000s of data points that may need individually selecting. In general, the higher the quality of 3D scan, the higher the spatial density of data points and in turn the higher the number of data points that must be manually selected in order to tag any given object. As a result, the task of identifying and classifying objects in 3D point clouds becomes a time consuming and resource-intensive task.

Aspects of the present disclosure seek to solve these and other problems encountered in the prior art.

### SUMMARY

In overview, the present disclosure provides a computer implemented method of identifying a target object in a 3D point cloud. The 3D point cloud represents a real-world scene. The method comprises obtaining a plurality of 2D frames of the 3D point cloud depicting the target object at a respective plurality of different angles, identifying the target object in each of the plurality of 2D frames, and based on identifying the object in each of the plurality of 2D frames, identifying a set of points in the 3D point cloud that represent the target object.

The present disclosure also provides a system comprising one or more processors and one or more computer readable media, which are optionally non-transitory, the computer readable media storing instructions that, when executed by the one or more processors, cause the one or more processors to carry out any of the methods or techniques disclosed herein.

The present disclosure also provides a computer-readable medium, which is optionally non-transitory, that stores instructions that, when executed by one or more processors, cause the one or more processors to carry out any of the methods or techniques disclosed herein.

Aspects of the present disclosure of the present application are set out in the independent claims. Other aspects of the present disclosure will be appreciated from the following description.

### BRIEF DESCRIPTION OF THE DRAWINGS

Aspects of the present disclosure will now be described, by way of example only, with reference to the accompanying drawings, in which:
Fig. 1a shows a 3D point cloud from a first viewpoint;
Fig. 1b shows the 3D point cloud of Fig. 1a from a second viewpoint;
Fig. 1c shows the 3D point cloud of Figs. 1a and 1b from a third viewpoint;
Fig. 2a shows an object mask for a 2D frame of the 3D point cloud from the viewpoint of Fig. 1a;
Fig. 2b shows an object mask for a 2D frame of the 3D point cloud from the viewpoint of Fig. 1b;
Fig. 2c shows an object mask for a 2D frame of the 3D point cloud from the viewpoint of Fig. 1c;
Fig. 3 shows the 3D point cloud of Figs. 1a - 1c with a classifier label applied to a target object;
Fig. 4 shows a computing device for implementing the operations described herein; and
Fig. 5 shows a flowchart for a method according to the present disclosure.

### DETAILED DESCRIPTION

In a first aspect, the present disclosure provides a computer-implemented method for identifying a target object in a 3D point cloud, where the point cloud represents a real-world scene. The method is automated, requiring minimal user input, and therefore overcomes problems associated with the conventional techniques that require a user to manually select every data point belonging to a target object. The method involves obtaining plurality of 2D frames or views of the 3D point cloud. Each of the 2D frames depicts the target object from a different angle. In other words, each 2D frames depicts the target object from a different viewpoint. Each 2D frame may be an image of the 3D point cloud from the respective viewpoint. For example, each 2D frame may comprise an array of pixels that depict the 3D point cloud from the respective viewpoint. After obtaining the plurality of 2D frames, the target object is identified in each 2D frame. This may be carried out using conventional object segmentation techniques that are well-known to the skilled person. In some examples, the Segment Anything 2 (SAM 2) segmentation tool may be used to identify the target object in each 2D frame. Based on the object segmentation for each 2D frame, it is possible to identify the set of points in the original 3D point cloud that represent the target object. In this way, the present disclosure provides an automated system for identifying objects in 3D point clouds that does not require a user to manually select those points belonging to the object. Instead, the data points belonging to the object are identified automatically based on the object being segmented from multiple different 2D frames or snapshots of the point cloud. In other words, the present disclosure leverages automated tools for object segmentation in 2D, in order to achieve automated object segmentation in a 3D point cloud.

In some embodiments, a method comprises displaying the 3D point cloud on a user interface of a user device, such as a computer screen. The 3D point cloud maybe displayed by an application that retrieves a file containing data for each point of the point cloud from computer storage, renders the file for display, and displays a visual model of the 3D point cloud via a user interface of the application. The application may be configured to receive various user inputs to manipulate the view of the point cloud, such as zooming in or out, changing the viewpoint by rotating the point cloud around one or more axes, highlighting individual points or groups of points, or any other tools necessary for viewing and manipulating the point cloud.

In some embodiments, the method comprises receiving a user input that is indicative of the target object to be identified. The user input may include a selection of one or more data points of the point cloud, such as a selection of a region of points that includes at least some of the data points that represent the target object. For example, the user input may involve creating a bounding box using a drawing tool of the application that highlights every data point within the bounding box. The bounding box may be drawn around the target object to encompass every data point representing the target object, as well as a plurality of data points not representing the target object but that are near to the target object. More generally, the user input may involve drawing any shape, such as any type of polygon around a region of points that includes at least some of the data points that represent the target object. For example, the user input may involve drawing a polygon around an area that includes the entirety of the target object.

Based on the user input that indicates the target object to be identified, the plurality of 2D frames (depicting the target object from different angles) can be obtained. In some embodiments, the target object is identified in each 2D frame by segmenting the target object using a segmentation algorithm or a segmentation tool. In some embodiments, the segmentation tool/algorithm generates, for each 2D frame, a 2D segmentation mask that identifies the target object.

To identify the set of points in the 3D point cloud that represent the target object, the 2D segmentation masks may be mapped to the 3D point cloud to identify the data points of the point cloud that correspond to each segmentation mask. In some embodiments, identifying the set of points in the 3D point cloud representing the target object comprises identifying the data points that correspond to two or more of the 2D segmentation masks.

In this way, the present disclosure allows a user to indicate a target object in a single action (i.e., a single click, drawing of a region surrounding the target object such as a bounding box, polygon, freehand area, or similar), after which the method described above identifies the set of data points of the point cloud that represent the whole target object. Compared to conventional techniques in which the user manually identifies and selects each data point, the methods of the present disclosure provide a simpler, less time-consuming and more accurate solution for identifying target objects in point clouds.

In some embodiments, segmenting the target object in each 2D frame comprises applying each of the 2D frame as input to a segmentation algorithm. Segmentation algorithms or tools that are able to segment objects in 2D images are well-known to the skilled person. In an example, the Segment Anything 2 (SAM 2) segmentation tool is used. As is known by the skilled person, the segmentation algorithm generates object masks highlighting the target object in each 2D frame. As described in more detail below, each object mask may comprise an array of pixels and may substantially correspond in size to the 2D frame. The object mask pixels are binary, for example taking a value of zero everywhere except for the area corresponding to the object identified in the 2D frame, where the pixels have a value of (for example) unity. In this way, the object mask can be overlaid on the corresponding 2D frame to highlight the identified object.

In some embodiments, the 3D point cloud is obtained using a 3D scanning system, such as a LiDAR scanning system, or any other suitable scanning system apparent to the skilled person. In some embodiments, the methods disclosed herein comprise obtaining the 3D point cloud by scanning the scene with the 3D scanning system. In other embodiments, the methods disclosed herein comprise obtaining a pre-recorded 3D point cloud from data storage, such as a non-transitory computer-readable memory.

In some embodiments, the plurality of 2D frames represent a sequence of 2D snapshots of the 3D point cloud obtained as the 3D point cloud is rotated about an axis of rotation. In other words, each adjacent frame of the sequence is separated by an angle of rotation of the 3D point cloud about a rotation axis. The 2D frames of the 3D point cloud may therefore collectively depict a rotation of point cloud about the rotation axis when the 2D frames are viewed in sequence. As would be appreciated by the skilled person, the segmentation tool used to identify the object in each 2D frame may analyse the 2D frames in sequence to track the object as the point cloud rotates.

In some embodiments, the axis of rotation may pass through a region of the point cloud defined by a user input as described above, where the user-defined region of the point cloud corresponds at least in part to the target object. In some embodiments, the axis of rotation may pass through or close to one or more data points selected by a user, or one or more data points within a region selected by the user.

In some embodiments, the method further comprises classifying the set of points that represent the target object. Classifying the set of data points may comprise applying one or more classifier labels to the set of data points. In some embodiments, classifying the set of data points comprises applying one or more of the 2D frames, or one or more 2D views of the sets of points representing the target object, to an image recognition algorithm. The image recognition algorithm may be configured to receive 2D frames of the 3D point cloud and as input and provide one or more classifier labels as output. The one or more classifier labels may then be applied to the set of data points representing the target object.

In some embodiments, classifying the set of data points comprises receiving a user input indicating one or more classifier labels for the target object. The user-defined classifier label may then be applied to the set of data points representing the target object.

In a second aspect, the present disclosure provides a system comprising one or more processors, and one or more computer-readable media. The one or more computer-readable medium storing instructions that, when executed by the one or more processors, cause the one or more processors to carry out any of the methods disclosed herein.

In a third aspect, the present disclosure provides a system comprising a computer-readable medium carrying instructions that, when executed by one or more processors, cause the one or more processors to carry out any of the methods disclosed herein.

### The 3D point cloud

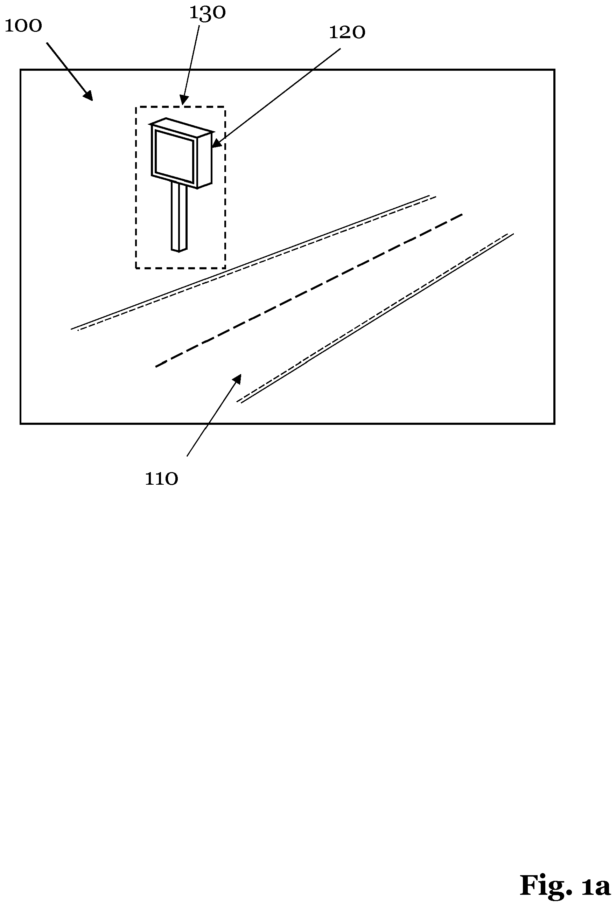

With reference to Figure 1a, a 3D point cloud 100 representing a scene of a section of road is shown from a first viewpoint. In the particular depiction of the point cloud 100 in Fig. 1a, the viewpoint is a first perspective view. As would be appreciated by the skilled person, the 3D point cloud may be obtained using a 3D scanning system, such as a LiDAR scanning system that scans a real-world scene and records a plurality of spatial data points representing the real-world scene. The plurality of spatial data points collectively form a three-dimensional (3D) "cloud" of data points that, when rendered and displayed via an interface, depicts the real-world scene. Systems and methods for recording, storing and displaying 3D point clouds representing real-world scenes are well-known to the skilled person.

The 3D point cloud 100 shown in Fig. 1a depicts a real-world scene comprising a section of road 110 and a road sign 120 positioned next to the section of road 110. In many examples, any real-world scene depicted by a 3D point cloud may include numerous features or objects. For example, the real-world scene as shown may additionally comprise lampposts, footbridges, vehicles travelling on the road, trees and other vegetation near to the road, any many other features. However, for the purposes of describing the present disclosure, such features are omitted for simplicity.

As would be appreciated by the skilled person, a 3D point cloud may be rendered and displayed via user interface of a user device (e.g. a computer, tablet, or phone screen, or any other suitable display) for a user to view and interact therewith. Due to its three-dimensional nature, the viewpoint cloud displayed via the user interface may be altered so that the point cloud is viewed from a different viewpoint. For example, any point cloud may be rotated about its centre point or about any other point therein. For the purposes of viewing, classifying, identifying and many other applications, a user may wish to alter the viewpoint by rotating the point cloud about a rotation axis in order to see features of the point cloud that may be obscured in certain views.

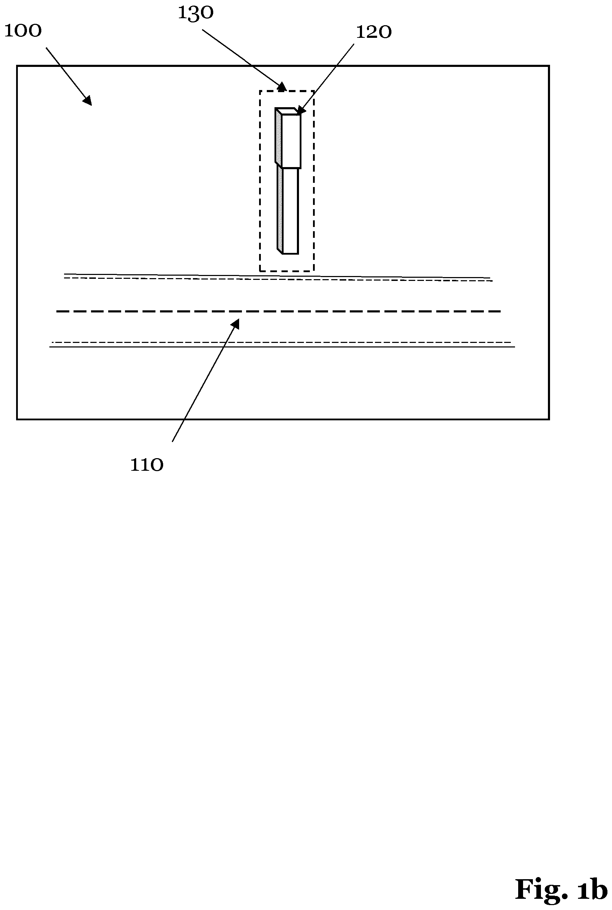

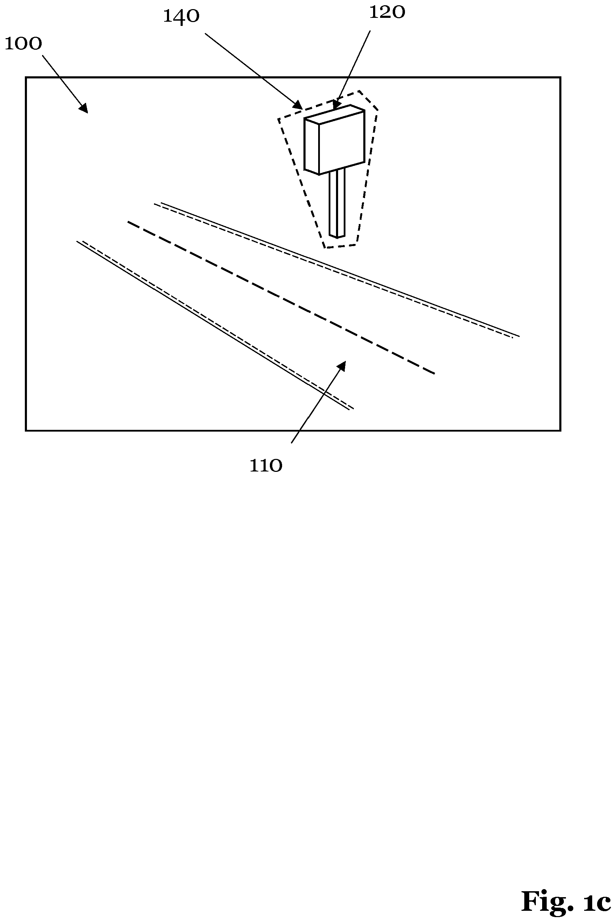

As described above, the 3D point cloud 100 is shown from a first viewpoint (i.e., from a first angle) in Fig. 1a. Figs. 1b and 1c show the same point cloud 100 including the same features (road 110 and road sign 120) from different respective viewpoints. In more detail, the first viewpoint shown in Fig. 1a shows the road 110 and road 120 from a first perspective angle. The second viewpoint shown in Fig. 1b shows the road 110 and road sign 120 from a side viewpoint. Referring to Fig. 1c, the same point cloud 100 is depicted from a third viewpoint (i.e., from a third angle), which may be described as a second perspective angle. Moving in sequence from the first viewpoint to the third viewpoint, the point cloud is rotated about a vertical axis passing through it centre or a through a point near to its centre. More generally, a 3D point cloud may be rotated about any rotation axis extending in any direction in order to show a view of the point cloud from any suitable viewpoint. For the purposes of describing the present disclosure, only three different views of the point cloud 100 are shown for the sake of brevity.

As described in more detail below, a plurality of 2D frames or snapshots of the point cloud 100 are obtained in order to carry out 3D object segmentation (i.e., to identify the data points of the point cloud representing a target object). Each 2D frame depicts the point cloud and the objects represented therein from a different respective viewpoint. For example, 2D snapshots maybe obtained for each of the viewpoints depicted in Figs. 1a - 1c in order to identify a target object depicted in each snapshot. In other words, each of the views of the point cloud shown in Figs. 1a, 1b and 1c represent 2D frames of the point cloud. As described in more detail below, a target object can be segmented from each 2D frame. The results of the 2D segmentation for each 2D frame are then used to identify the points of the point cloud that correspond to the target object, thereby identifying the target object itself within the point cloud. The following section describes in more detail the techniques for determining the target object to be identified.

### User-defined target objects

As described above, in many circumstances it is desirable to identify different objects that are depicted within a 3D point cloud. Identifying objects depicted within a point cloud refers to determining the set of points within a point cloud that represent the object. Once the set of points representing the object is determined, each point in the set can be classified with a classifier label, which may be include a text-string indicating a descirptor for the object (e.g., the object's name, such as "road sign"). Conventionally, to identify any given target object within a point cloud, a user would manually select each point in the point cloud that represents the object. However, high-density point clouds may include 100s or 1000s of individual data points collectively representing a single object. As such, identifying target objects using conventional techniques is a time-consuming and resource-intensive task.

The systems and methods disclosed herein enable target objects within point clouds to be identified in a way that avoids manual selection of many individual points within a point cloud. Instead, a user may indicate a target object to be identified with a single user input, such as a click or drag of a cursor on a user interface, or using a single gesture in a touch-screen interface.

Referring back to Fig. 1a, one such example of a user input to indicate a target object to be identified comprises a bounding box 130 that is generated around a region containing the target object. In the example shown, the target object to be identified is the road sign 120. Although the exact set of data points corresponding to the road sign 120 are not yet known, the user is nonetheless capable of visually identifying the region of the point cloud containing the road sign. As such, a bounding box may be drawn around the road sign to indicate a target object for automatic identification and/or classification (as discussed below).

As would be appreciated by the skilled person, the bounding box 130 may be drawn using functionality included within the application that renders and displays the point cloud 100 in the user interface. In particular, the application may have a bounding box drawing tool which requires a user to select a first position next to the target object and drag a box of a user-defined shape and size from that position to a second position next to the target object. In doing so, the bounding box highlights a region of points within the point cloud that includes the set of points that correspond to the target object. As described in more detail below, the user-defined input indicating the target object to be identified may be used in some embodiments to obtain the plurality of 2D frames that depict the target object from various viewpoints. In some embodiments, the user-defined input is used to indicate the target object to be segmented in each 2D frame.

Whilst the embodiment described above relates to a bounding box drawn around the target object, more generally the user-defined input to indicate the target object may be any suitable input that results in a selection of one or more of the points that represent the target object. For example, the user input may, in some embodiments, include the selection of a single data point of the point cloud 100, that single data point being one of the set of data points that represents the target object. For example, a user may tap or click or otherwise select any part of the target object they wish to identify, thereby selecting one of the points representing the target object. From this user-defined selection, a plurality of 2D frames depicting the target object maybe obtained as described above.

In another embodiment, the user-defined input may include a region of the point cloud 100 defined by a polygon drawn by the user. Fig. 1c shows one such example of a polygon 140 drawn around the target object (the road sign 120). In a similar manner to the drawing of the bounding box 130 described above, the polygon may be drawn using functionality contained within the application that renders and displays the point cloud 100. In particular, the application may have a polygon drawing tool which allows the user to select a sequence of points around the target object, whereby the application generated straight lines between adjacent points in the sequence. The polygon thus highlights a region of points within the point cloud that includes the set of points that corresponding to the target object.

In other embodiments, any suitable tools or means for selecting one or more points of the point cloud, such as a region of points of the point cloud, may be used to indicate the target object to be identified. In some examples, the user-defined point or region of points of the point cloud may include every point that represents the target object (as is the case with the bounding box 130 shown in Fig. 1a and the polygon 140 shown in Fig. 1c). In other examples, a user-defined region of points may include only a subset of the points that represent the target object.

In any case, the user-defined input may be used to determine the plurality of 2D frames used for 2D segmentation. For example, the rotation axis (about which the point cloud is rotated to obtain the plurality of 2D frames each depicting the point cloud from a different angle) may pass through the user-defined point or region of points to ensure that each 2D frame depicts the target object.

### Object segmentation in 2D frames

After determining the target object to be identified in the point cloud (by user-defined input as described above, or otherwise), and obtaining the plurality of 2D frames depicting the target object from a respective plurality of different viewpoints (e.g. 2D frames corresponding to the views of the 3D point cloud 100 as shown in Figs. 1a, 1b and 1c), the methods disclosed herein involve segmenting the target object in each of the plurality of 2D frames.

To segment the target object in each of the 2D frames, the methods described herein may use conventional 2D segmentation techniques that are known to the skilled person. As is well understood by the skilled person, 2D segmentation is used to segment, or identify, features or objects within 2D images. For any given 2D image, objects or features in that image may be segmented by identifying the pixels of the 2D image that correspond to the target feature or object. One such example of a tool used to segment 2D images that is well-known to the skilled person is the Segment Anything 2 (SAM 2) segmentation tool. SAM2 takes a 2D image as input, or a sequence of 2D frames (i.e., a video consisting of a plurality of 2D frames) and identifies a target object within the 2D image or within the sequence of 2D frames. In general, any third-party tool suitable for 2D object segmentation maybe used.

In more detail, and with reference to the methods of the present disclosure, each of the 2D frames of the point cloud (i.e. 2D images of the point cloud from the viewpoints shown in Figs. 1a, 1b and 1c) are provided as input to a segmentation tool in order for the target object to be segmented in each 2D frame using any suitable 2D segmentation technique apparent to the skilled person. In some examples, the SAM2 segmentation tool is used to identify the target object in each 2D frame. In some embodiments, segmenting each 2D frame comprises generating a segmentation mask, or object mask for the 2d frame. The object masks indicate the portion of the 2D frame that contains the pixels representing the target object. The skilled person is well aware of the techniques used to generate an object mask that segments a target object in any given object.

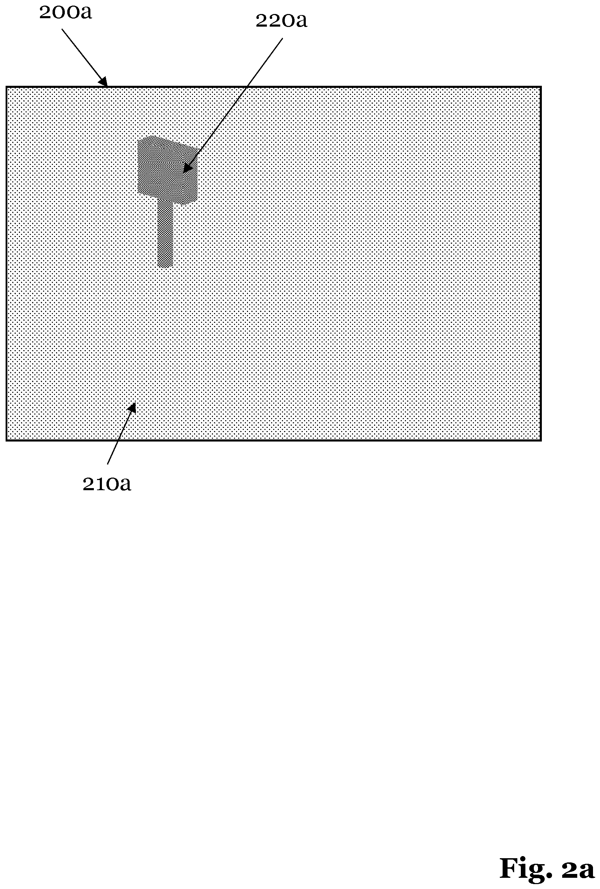

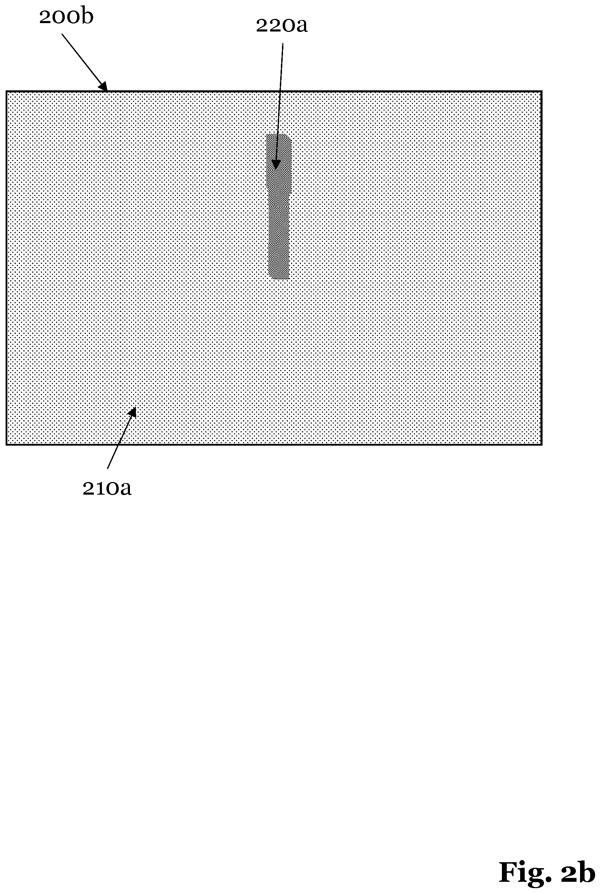

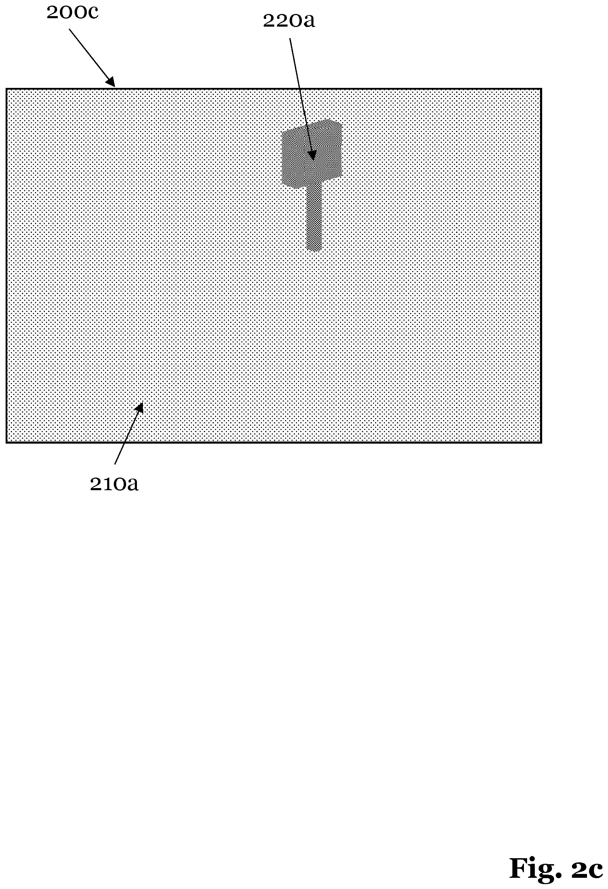

With reference to Figs. 2a - 2c, exemplary object masks 200a, 200b and 200c are shown, each object mask corresponding to the 3D point cloud 100 shown in Figs. 1a - 1c. In more detail, the object mask 200a shown in Fig. 2a corresponds to a 2D frame of the point cloud from the viewpoint shown in Fig. 1a. The object mask 200b shown in Fig. 2b corresponds to a 2D frame of the point cloud from the viewpoint shown in Fig. 1b. The object mask 200b shown in Fig. 2b corresponds to a 2D frame of the point cloud 100 from the viewpoint shown in Fig. 1b. In other words, a 2D frame of the point cloud from the first viewpoint (shown in Fig. 1a) is segmented using any suitable segmentation technique to produce the object mask 200a shown in Fig. 2a, which identifies the region of the 2D frame representing the target object (the road sign 120). Similarly, 2D frames of the point cloud 100 from the second and third viewpoints (shown in Fig. 1b and 1c respectively) are segmented to produce the object masks 200b and 200c shown in Figs. 2b and 2c respectively.

In this particular example, each object mask comprises an array of binary pixels, meaning that the value of each pixel is selected from a binary set (e.g. [0, 1]). Each object mask consists of first region 210 of pixels that do not correspond to the target object identified by the segmentation tool, and a second region 220 of pixels corresponding to the identified target object. The first region 210 of pixels may be set with a first value (e.g., a value of zero) whilst the second region 220 of pixels is set with a second value (e.g., a value of one). In this way, the object mask provides a binary map of pixels, where the pixel value is of a first value (e.g., zero) everywhere except for the region that corresponds to the target object (i.e., the second region), where the pixels have a second value (e.g., one). Referring to Figs. 2a, 2b and 2c, the pixels of the object mask not corresponding to the target region (i.e., the first region 210) are shown with a first shading. The pixels corresponding to the target object (i.e., the second region 220) are shown with a second shading 220.

The object masks therefore identify the region of the corresponding 2D frame of the point cloud that represents the target object. In other words, the object masks identify the plurality of pixels of the corresponding 2D frame that depict the target object. As such, each object mask can be overlaid on its corresponding 2D frame to highlight the pixels of the 2D frame that represent the target object.

### Object segmentation in the 2D point cloud

After identifying the target object in each of the plurality of 2D frames as described above (i.e., using 2D segmentation techniques), the resultant object masks (e.g., masks 200a, 200b, 200c) may be used to identify the target object in the original 3D point cloud (e.g., point cloud 100). In other words, the object masks obtained from the 2D segmentation of the 2D frames are used to identify the set of points in the 3D point cloud that represent the target object. In this way, conventional segmentation techniques that are limited to 2D inputs can be used to identify objects in 3D point clouds. The manner in which the plurality of object masks corresponding to the plurality of 2D frames are used to identify the target object in the 3D point cloud is now described.

In more detail, identifying the set of points representing the target object involves mapping each 2D object mask onto the 3D point cloud. As described in more detail below, the plurality of object masks are mapped onto the 3D point cloud to identify, for each mask, a volume of points that lie beneath of behind the pixels of the region of the mask that identies the target object (i.e., behind the pixels of the second region 220). The volume of points corresponding to each mask are then combined and filtered as described below to produce a single set of points of the point cloud representing the target object.

For any given object mask, mapping the mask to the 3D point cloud requires overlaying the mask on the point cloud, where the point cloud is oriented in the perspective of the viewpoint of the 2D frame from which the mask is derived. In other words, each object mask must be mapped to the point cloud from the viewpoint of the mask itself. With reference to the figures, identifying the set of points representing the road sign 120 therefore involves overlaying the mask 200a of Fig. 2a on the 3D point cloud 100 from the perspective shown in Fig. 1a. The shape of the region 220a in the mask 200a will therefore correspond to the shape of the target object as depicted in the point cloud from the viewpoint shown in Fig. 1a. Similarly, the mask 200b of Fig. 2b is overlaid on the point cloud 100 from the perspective shown in Fig. 1b, and the mask 200c of Fig. 2c is overlaid on the point cloud 100 from the perspective shown in Fig. 1c. Therefore, in general, the outline of the target object as identified by the object masks will correspond to the outline of the target object as depicted in the point cloud.

As mentioned above, after overlaying an object mask (e.g., mask 200a) onto the point cloud (e.g., at the viewpoint shown in Fig. 1a), a volume of points of the point cloud are identified that lie behind the mask (when the point cloud 100 is viewed from that same viewpoint). In more detail, when overlaid on the point cloud 100, the regions of each object mask that identify the target object (e.g., the second regions 220a, 220b, 220c of the masks) conceal a volume of data points of the point cloud. In other words, the regions of each object masks identifying the target object leave an effective "shadow" of points behind the mask when the mask is overlaid on the point cloud. Those points lying in the shadow of the object mask are therefore concealed by the mask as they are located behind the mask (when the point cloud is viewed from the relevant viewpoint). In effect, every pixel of the second region 220 of the object mask casts a shadow on the point cloud, where the shadow defines a column extending behind the mask and through the point cloud in a direction normal to the plane of the object mask, and with a cross-section that corresponds in size and shape to the size and shape of the pixel of the object mask. Collectively therefore, the plurality of pixels of the second region 220 of each object mask 200 casts a shadow on the point cloud, defined as a prism-shaped volume extending through the point cloud in a direction normal to the plane of the mask, with a cross-sectional shape and size corresponding to the shape and size of the whole second region 220 of the object mask.

For each object mask, the volume of points lying in the "shadow" (i.e., the set points lying in the prism-shaped volume behind the mask) are identified and may be recorded, for example in a data structure that indexes each point in the set and which may record the spatial position of each point. This process is repeated for each object mask corresponding to each 2D frame of the point cloud. For example, with reference to the drawings, sets of points lying in the "shadows" of each of the object masks 200a, 200b and 200c may be identified, where each set defines a volume of points that extends through the point cloud in a direction that is normal to the plane of its respective mask as described above.

Due to the mapping of the object masks onto the point cloud, each set of points identified as described above (i.e., each set of points corresponding to each point cloud) will contain all of the points representing the target object. However, since the sets contain every point lying behind the object mask, the sets also contain additional points that do not represent the target object. To filter these additional points out (leaving a set only including the data points representing the target object), two or more sets of points corresponding to two or respective object masks may be compared to identify an intersection of points of the two or more sets, i.e., the points that are common to all of the two or more sets.

In more detail, after identifying the sets of points corresponding to the plurality of object masks, the plurality of sets is compared using any suitable technique apparent to the skilled person to identify all of the points that are present in each of the sets. Those points that are present in each set (i.e., the points that are common to each set) are then identified as the resultant set of points of the point cloud that represents the target object. This is because the points in each set corresponding to each 2D object mask represent different viewpoints of the target object. Each set therefore intersects with each other set at the exact position of the target object within the point cloud, and so those points which are common to each set are those points representing the target object.

In some embodiments, identifying the resultant set of points that represent the target object therefore comprises identifying the points that are common to two or more sets of points that correspond to two or more respective object masks. In some embodiments, the resultant set of points that represent the target object are the points that are common to every set corresponding to every object mask. In some embodiments, the resultant set of points that represent the target object are the points that are common a threshold number of sets corresponding to a respective threshold number of object masks. The threshold number may be a fixed absolute value, for example points common to the sets corresponding to five object masks. Alternatively, the threshold number may be a portion of the total number of sets, for example points common to at least half of the sets corresponding to at least half of the object masks. In general, the accuracy of the resultant set of points representing the target object may increase with the threshold number of sets required for identifying the common points.

### Object classification in the point cloud

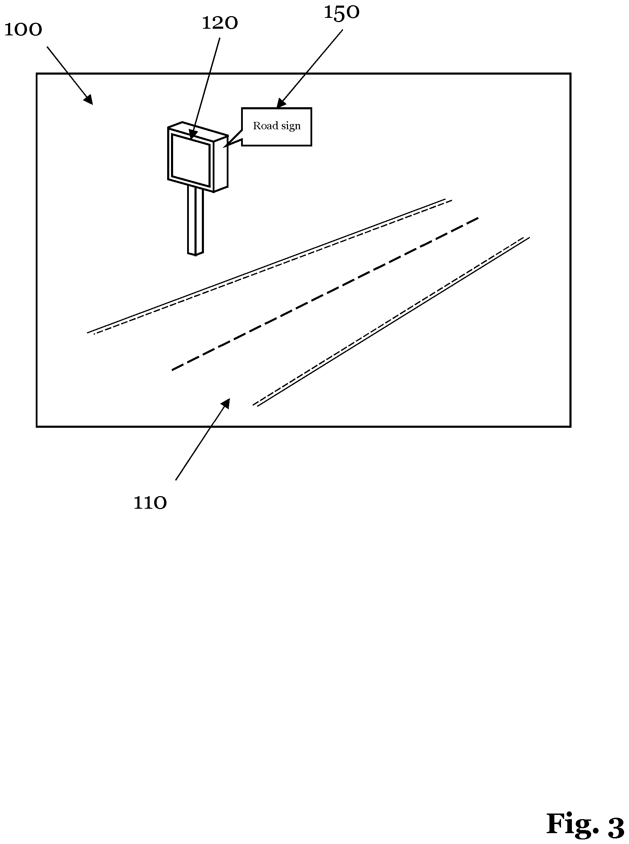

Once the set of points in the point cloud representing the target object has been determined (using the techniques described above), that set of points may be classified according to the nature of the target object the set represents. With reference to fig. 3, the point cloud 100 is shown from the first viewpoint with a classifier label 150 applied to the set of points representing the road sign 120. The classifier label 150 may be permanently displayed in conjunction with the point cloud 100, or the label may be displayed when any one of the points in the set of points representing the road sign 120 are selected. For example, the label may only be displayed when a cursor hovers over any point representing the road sign 120, or when a cursor clicks on, taps on, or otherwise selects any of the points representing the road sign.

To classify the set of points representing the target object, a user may apply a classifier label to the set of points using a native tool within the application used to render and display the point cloud 100. For example, once the set of points representing the target object has been identified using the techniques above, a tool may be used to label that set of points with a label, such as a text string. The label may be associated with the target object and may include a text string descriptor, such as a name for the object, or any other suitable descriptor. For example, the tool may provide the user with a user interface in which to input a text string, such as "Road sign". The classifier label 150 shown in Fig. 3 includes the text string "Road sign" applied to the set of points representing the road sign 120.

In another embodiment, a classifier label may be applied to the set of points using an automated tool that does not require user input. In more detail, the set of points representing the target object can be classified using conventional image recognition or classification techniques that are well-known to the skilled person. Classifying the set of points in this way involves applying a 2D view of set of points representing the target object to an image recognition algorithm. The 2D view of the set of points may be cropped from one of the original 2D frames depicting the point cloud or may otherwise be a snapshot of the set of points of the target object obtained from a certain viewpoint. The image recognition algorithm receives the 2D view of the point cloud and provides one or more classifier labels for the target object (e.g., one or more text string descriptors) as output.

The application used to render and display the point cloud may subsequently receive the one or more classifier labels from the image recognition algorithm (e.g., through an API) and automatically apply those classifier labels to the set of points representing the target object. In this way, a set of points representing a target object can be segmented from a point cloud (i.e. identified within the point cloud) using the techniques described above, and automatically classified using an automated image recognition algorithm without any user input, other than in some examples to indicate the target object (e.g., using a bounding box 130 or polygon 140).

### Computer system and method

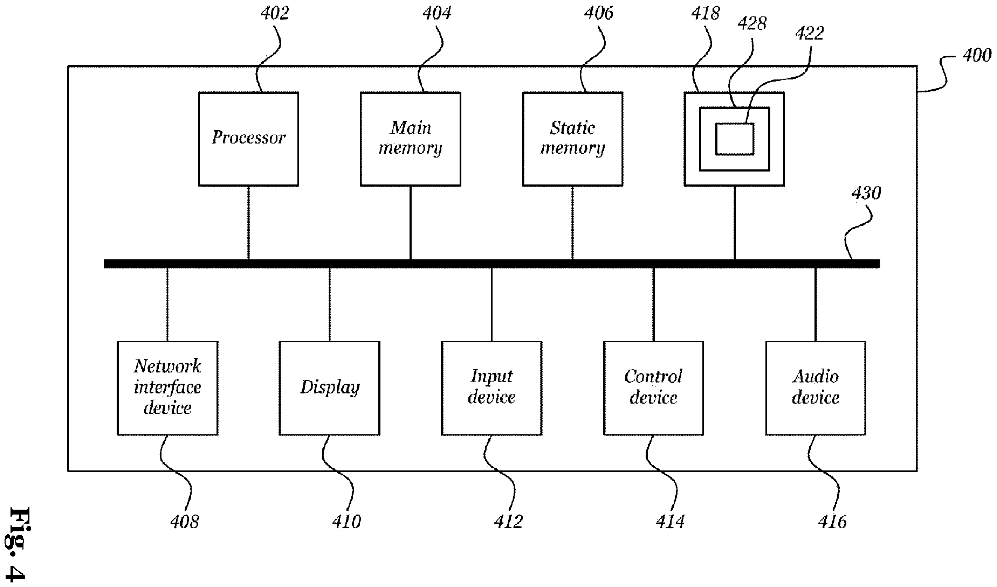

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-t-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

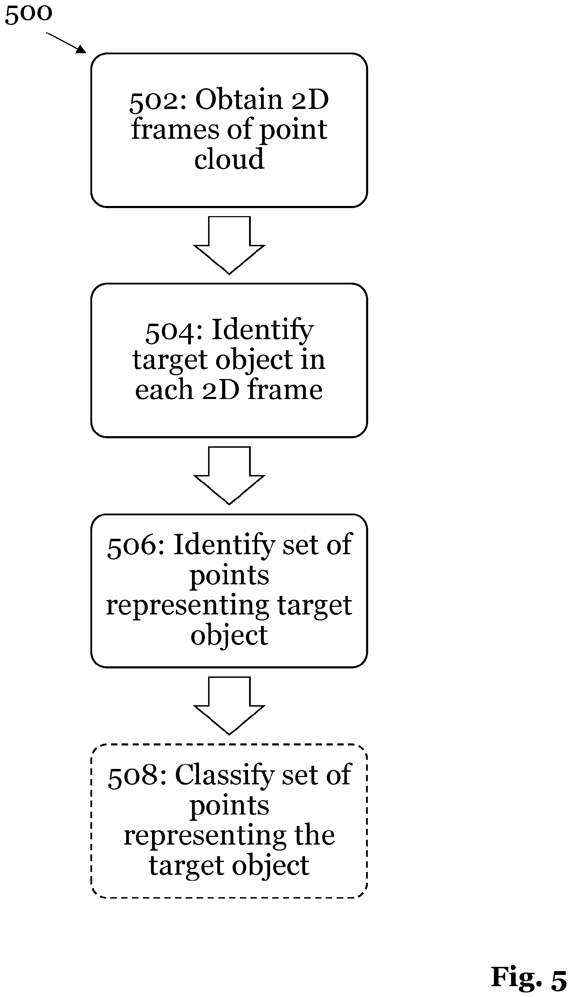

A flowchart for a method for identifying a target object in a 3D point cloud according to the present disclosure is now described with reference to Figure 5. The 3D point cloud comprises a plurality of points and represents a real-world scene. In some embodiments, the 3D point cloud is obtained by scanning the real-world scene, for example using a LiDAR scanning system.

Th method 500 comprises a first step 502 of obtaining a plurality of 2D frames of the 3D point cloud. Each 2D frame depicts the target object in the point cloud from a different respective angle. In other words, each 2D frame depicts the target object from a different respective viewpoint. Each 2D frame may obtained by recording a 2D snapshot of the point cloud from each of the respective viewpoints. In some embodiments, step 502 may comprise obtaining a plurality of frames from different equally spaced angles around the point cloud. For example, step 502 may comprise obtaining 12 different 2D frames each from a different angle, where adjacent 2D frames are separated by a rotation of 30 degrees about the point cloud. 12 2D frames separated by 30 degrees therefore depict the point cloud through a full 360-degree rotation of the point cloud. In other examples, more or fewer 2D frames may be obtained. Adjacent viewpoints in the 2D frames may be separated by a constant amount of rotation or by varying amounts of rotation. The plurality of viewpoints may collectively depict the point cloud through a full 360-degree rotation, or less. For example, the plurality of frames may consist of four frames, with adjacent frames separated by 45 degrees of rotation, thereby collectively depicting the point cloud through 135 degrees of rotation.

Following step 502, the method 500 comprises a step 504 of identifying the target object in each 2D frame obtained at step 502. For each 2D frame, the target object may be identified using 2D object segmentation tools, such as third-party tools, for example Segment Anything 2 (SAM 2). In some examples, identifying the target object in step 502 includes segmenting the target object in each 2D frame to produce corresponding object masks. The object masks identify the pixels of the respective 2D frames that depict the target object.

Based on identifying the target object in each 2D frame at step 504, the method 500 proceeds to step 506 in which the set of points in the 3D point cloud representing the target object are identified. In some embodiments, this may be performed by mapping the object masks to the point cloud and identifying, for each object mask mapped to the 3D point cloud, a volume of points of the point cloud corresponding to that object mask. The set of points representing the target object may then be determined as the points that are common to at least two of the volumes of points (the points of the point cloud that correspond to at least two of the object masks when the object masks are mapped to the point cloud). In some embodiments, the set of points representing the target object may be determined as the points common to every volume (the points that correspond to every object mask), or the set of points that correspond to a threshold number of object masks.

Optionally, the method 500 may further comprise a step 508 of classifying the set of points in the point cloud that represent the target object. Classifying the set of points may comprise applying one or more classifier labels to the set of points, wherein the classifier labels include a text string descriptor for the target object (e.g., a name of the target object). The classifier labels may be generated on a user input, or may be provided by an image recognition algorithm, which takes a 2D image of the set of points of the target object as input and provides one or more classifier labels as output.

Some or all of the disclosed methods maybe implemented using a computer apparatus or computing device. Accordingly, the methods described herein may form all or part of a computer-implemented method. An example computing device is shown in Fig. 5.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for identifying a target object in a 3D point cloud, the 3D point cloud representing a real-world scene, the method comprising:
obtaining plurality of 2D frames of the 3D point cloud depicting the target object at a respective plurality of different angles;
identifying the target object in each of the plurality of 2D frames; and
based on identifying the object in each of the plurality of 2D frames, identifying a set of points in the 3D point cloud that represent the target object.

2. The method of claim 1, further comprising:
displaying, on a user interface of a user device, the 3D point cloud; and
receiving, via the user interface, a user input indicating the target object to be identified.

3. The method of claim 2, wherein the user input includes a selection of one or more data points of the 3D point cloud that represent the target object.

4. The method of claim 3, wherein user input includes a selection of a region of the point cloud containing a plurality of data points, wherein the plurality of data points includes at least some of the data points representing the target object.

5. The method of any preceding claim, wherein identifying the target object in each 2D frame comprises segmenting the target object using a segmentation algorithm, wherein the segmentation algorithm generates, for each 2D frame, a 2D segmentation mask identifying the target object.

6. The method of claim 5, wherein identifying the set of points in the 3D point cloud representing the target object comprises mapping each 2D segmentation mask to the 3D point cloud, and identifying the data points of the 3D point cloud corresponding to each 2D segmentation mask.

7. The method of claim 6, wherein identifying the set of points in the 3D point cloud representing the target object comprises identifying the data points that correspond to two or more of the 2D segmentation masks.

8. The method of any preceding claim, further comprising obtaining the 3D point cloud by scanning the scene with a 3D scanning system, optionally wherein the 3D scanning system is a LiDAR scanning system.

9. The method of any preceding claim, wherein the plurality of 2D frames represent a sequence of snapshots of the 3D point cloud obtained as the 3D point cloud is rotated about an axis of rotation.

10. The method of claim 9, wherein the rotation axis passes through a region of the point cloud defined by a user input, wherein the region defined by the user input corresponds at least in part to the target object.

11. The method of any preceding claim, further comprising classifying the set of points that represent the target object, wherein classifying the set of data points comprises applying one or more classifier labels to the set of points representing the target object.

12. The method of claim 11, wherein classifying the set of data points comprises applying one or more of the 2D views to an image recognition algorithm, wherein the image recognition algorithm is configured to receive a 2D view of the set of points as input and provide one or more classifier labels as output.

13. The method of claim 11 or 12, wherein classifying the set of data points comprises receiving a user input indicating one or more classifier labels for the target object.

14. A system comprising:
one or more processors; and
one or more computer readable media storing instructions that, when executed by the one or more processors, cause the one or more processors to carry out the method of any preceding claim.

15. A computer-readable medium carrying instructions that, when executed by one or more processors, cause the one or more processors to carry out the method of any of claims 1 to 13.
